Europäisches Patentamt

European Patent Office

Office européen des brevets

(19)

(11) Veröffentlichungsnummer: **0 222 200 B1**

(12) **EUROPÄISCHE PATENTSCHRIFT**

(45) Veröffentlichungstag der Patentschrift: **28.08.91**

(51) Int. Cl.5: **G11B 23/113**

(21) Anmeldenummer: **86114341.0**

(22) Anmeldetag: **16.10.86**

(54) **Maschine zum Aufspulen von Magnetband auf Bandkassetten.**

(30) Priorität: **17.10.85 IT 2252585**

(43) Veröffentlichungstag der Anmeldung:
**20.05.87 Patentblatt 87/21**

(45) Bekanntmachung des Hinweises auf die
Patenterteilung:
**28.08.91 Patentblatt 91/35**

(84) Benannte Vertragsstaaten:
**AT BE CH DE ES FR GB LI**

(56) Entgegenhaltungen:
**WO-A-84/01563**
**DE-A- 2 157 570**
**DE-A- 2 524 537**
**DE-A- 2 707 391**
**US-A- 4 497 454**

(73) Patentinhaber: **ROBOTECNICA S.r.l.**
**Via Clerici, 2/4**
**20099 Sesto San Giovani (MI)(IT)**

(72) Erfinder: **Bosco, Angelo**
**Via Kennedy, 27**
**I-20097 San Donato Milanese (Mi)(IT)**
Erfinder: **Parravicini, Marco**
**Via Curiel 6**
**I-20037 Paderno Dugnano (Mi)(IT)**

(74) Vertreter: **Vogl, Leo, Dipl.-Ing.**
**Licentia Patent-Verwaltungs-G.m.b.H.**
**Theodor-Stern-Kai 1**
**W-6000 Frankfurt 70(DE)**

Rank Xerox (UK) Business Services

## Beschreibung

Die Erfindung betrifft eine Maschine zum Aufspulen von Magnetbändern auf Kassetten mit Anfangs- und Endbandstücken.

Es sind derartige Maschinen bekannt (DE-OS 27 07 391) bei denen das Vorspannband, das zur Herstellung der Anfangs- und Endbandstücke dient, mittels einer Saugvorrichtung aus der Kassette herausgezogen und an eine Schnittvorrichtung herangeführt wird. Das Vorspannband wird dann an das aufzuspulende Band angeheftet und das aufzuspulende Magnetband, das auf einer Zuführspule aufgewickelt ist, durch führungselemente einer Schneid- und Klebevorrichtung zugeführt. Die Schneid- und Klebevorrichtung kann so ausgebildet sein, daß während dem Aufspulen einer Bandkassette eine zweite Kassette für das Laden mit Magnetband vorbereitet wird.

Es ist schon bekannt, derartige Maschinen (Tapematic 2000) so auszurüsten, daß zwei Zuführspulen für Magnetband, das in die Kassetten eingespult wird, vorgesehen sind. In solchen Maschinen wird nach dem Auslaufen des Magnetbandes auf einer Zuführspule mittels einer Steuervorrichtung von einer Schneid- und Klebevorrichtung das Ende des Magnetbandes des letzten Spulvorganges vom Rest des auf der Spule noch befindlichen Bandes abgeschnitten und an den Anfang des Bandes der zweiten Spule geklebt. Durch diese Vorrichtung wird ein kontinuierliches Bespulen von Kassetten möglich, ohne daß eine Unterbrechung der Arbeitsabläufe der Maschine für den Wechsel einer Zuführspule notwendig ist. Die neue Zuführspule kann in der Vorrichtung so angeordnet werden, daß wahrend der Entnahme von Magnetband von der zweiten Spule eine neue erste Spule aufgelegt werden kann, und der Anfang des Magnetbandes der neuen Spule bis zur bis zur Schneid- und Klebevorrichtung geführt wird.

Weiter ist aus der US-Patentschrift 4497,454 bereits bekannt, mittels einer Meßrolle die Länge bereits abgelaufenen Magnetbandes zu bestimmen und einer Auswerte- und Steuerschaltung zuzuführen, um zu bestimmen, wann der Wechsel der Zuführspule erfolgen soll. Ein Nachteil der Steuerung dieser Maschine besteht darin, daß nicht berücksichtigt wird, daß bei der Anbringung einer neuen Zuführspule mit Magnetbändern unterschiedlicher Dichte, die Bandmenge, die in die Kassette aufspulbar ist, nicht festgelegt werden kann, wenn Bänder mit zuvor nicht bekannten Dikken verwendet werden. Dies kann insbesondere dazu führen, daß die Aufspulung der gewünschten Länge eines Magnetbandes in eine Kassette infolge Platzmangels nicht möglich ist.

Ein Verfahren und eine Vorrichtung zur Dickenmessung von Folien sind aus der DE-OS 21 57 570 bekannt, wonach bei jedem Umlauf oder mehreren ganzteiligen Umläufen einer Vorratsrolle Längenänderung des Folienbandes durch eine mitgeführte Meßrolle bestimmt wird und aus der Längenänderung beim Umlauf der Vorratsrolle die mittlere Dikke der Folie berechnet wird.

Aufgabe der Erfindung ist es, ein Verfahren zur Steuerung einer gattungsgemäßen Maschine zum Aufspulen von Magnetband auf Kassetten und eine Vorrichtung zur Durchführung dieses Verfahrens anzugeben, bei der aus wenigen Meßwerten der bei Abspulvorgängen abgespulten Magnetbandlänge und der entsprechenden Umdrehungen der Zuführspule die mittlere Magnetbanddicke bestimmt und zur Steuerung der Maschine verwendet wird.

Diese Aufgabe wird erfindungsgemäß durch die Merkmale der Ansprüche 1 bzw. 3 gelöst. Weitere vorteilhafte Ausführungen der Erfindung sind in den Unteransprüchen 2 und 4 bis 10 angegeben. Insbesondere wird nach Anspruch 2 aus den Werten der Magnetbanddicke die Menge des in eine Kassette aufzuspulenden Magnetbandes ermittelt.

Die Längenmeßeinrichtung besteht aus einer Rolle, die auf der Führung des Magnetbandes liegt und mit einer Scheibe verbunden ist, die als Drehzahlmesser fungiert. Die Anordnung des Drehzahlmessers an der Rolle auf der Führung des Magnetbandes, sowie die Anordnung der Drehzahlmesser auf den Zuführspulen kann außerdem so genutzt werden, daß die Impulse der Drehzahlsensoren der Zuführspulen über einen Schaltkreis AND mit den Impulsen der Sensoren auf der Führungsrolle des Magnetbandes so in Verbindung gebracht werden, daß das Einschalten der Zuführspule von der das Magnetband abgezogen werden soll, gesteuert wird.

Von Vorteil ist die Verbindung des Mikroprozessors mit einem Speicher, der die Werte, die von den Sensoren an den Mikroprozessor gegeben werden, speichert. Hierdurch ist ein Vergleich der im gegenwärtigen Aufspulprozess gemessenen Werten mit denen des vorangegangenen Aufspulprozesses möglich. Der Mikroprozessor weißt außerdem eine Eingabevorrichtung für. den Wert der Größe des Zuführspulenkerns auf.

Außerdem ist die Verbindung des Mikroprozessors und des Speichers mit einer Prüfvorrichtung von Vorteil, die selbständig Kombinationen der gemessenen Werte einem Datenprüfspeicher oder einem anzeigenden Gerät zuführt.

Ein Beispiel der Erfindung wird nachfolgend an Hand der beiliegenden Zeichnung beschrieben.

Fig. 1     zeigt eine Gesamtansicht der Maschine

Fig. 2     zeigt ein Blockschema der Steuerung

Fig. 3     ein Blockschema des Mikroprozessors und der Speicher, sowie die Zuordnung der Sensoren für die Längenmessung und die Drehzahl.

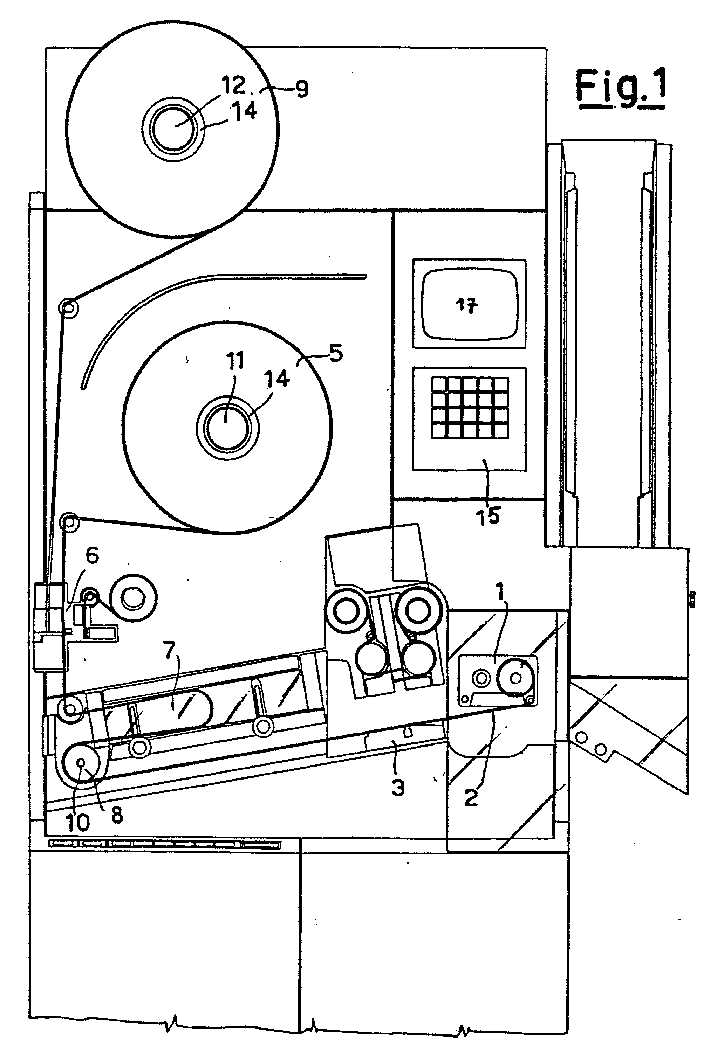

In Fig. 1 ist mit 1 die zu bespulende Kassette bezeichnet, die durch ein nicht dargestelltes Zuführgerät der Maschine zugeführt wird. Das Zuführgerät ist seitlich angeordnet. Durch eine Vorrichtung 2 wird eine Schleife des Vorspannbandes mittels Unterdruck herausgezogen und an den Schlitten einer Schneide- und Klebevorrichtung geführt. Parallel dazu wird dem Schlitten 3 der Schneide- und Klebevorrichtung das aufzuspulende Magnetband von einer Zuführspule 5 über eine Schneide- und Klebevorrichtung 6, einer Schleifenführung 7 und einer Rolle 8 zugeführt.

Neben der Zuführspule 5 liegt eine weitere Zuführspule 9, deren Magnetband bis zu zur Schneide- und Klebevorrichtung 6 geführt wird.

Gemäß der Erfindung ist auf der Rolle 8 ein Drehzahlsensor 10 angeordnet. Ebenso sind Drehzahlsensoren 14 auf den Achsen 11, 12 der Zuführspulen 5 und 9 angeordnet. Bei zwei aufeinanderfolgenden Spulvorgängen werden die Anzahl der Umdrehungen der Zuführspule, die dabei abgespulte Magnetbandlänge gemessen und die entsprechenden Werte dem Mikroprozessor 13 zugeführt. Die bei einer oder mehreren Umdrehungen der Zuführspule abgespulte Länge Magnetband entspricht dabei gemäß der Formel $L = 2\pi R$ jeweils einem bestimmten Radius R der Zuführspule. Aus den Radien $R_1$ und $R_2$ der beiden Abspulvorgänge kann wiederum die mittlere Dicke des Magnetbandes ermittelt werden, da der jeweilige Wert des Spulenradius sich aus der Menge des auf der Spule befindlichen Magnetbandes und dem Wert des Spulenkernradius ergibt.

Andererseits kann aus der Magnetbanddicke und dem Spulenkernradius für eine vorgegebene Länge von Magnetband der zugehörige Radius der Zuführspule berechnet werden, für den wiederum die Drehzahl der Zuführspule ein Maß darstellt. Die kritische, eine vorgegebene Länge Bandes entsprechende Drehzahl wird erfindungsgemäß zur Steuerung der Bandspulmaschine verwendet. Da mit abnehmendem Radius der Zuführspule und damit auch Bandmenge, die noch auf der Spule vorhanden ist, die Zuführspulendrehzahl zunimmt, erfolgt die Steuerung dadurch, daß eine bestimmte kritische Drehzahl festgelegt wird, und die aktuelle Drehzahl der Zuführspule mit dieser kritischen Drehzahl verglichen wird. Wird diese kritische Drehzahl erreicht, d.h. die Länge des noch vorhandenen Bandes auf dem Spulenkern 14 zu klein, wird ein Steuersignal zum Wechsel zur zweiten Spule an die Vorrichtung 6 ausgelöst.

Der Mikroprozessor dient gleichzeitig dazu, aus den Umdrehungszahlen der Rolle 8 und der dazu im Verhältnis stehenden Umdrehungszahlen der Spulen 5 oder 9, durch einen logischen Schaltkreis (AND) am Anfang der Magnetbandzuführung an den Schlitten 3 das Einschalten des Antriebsmotors der Zuführspule 5 oder 9 zu bewirken. und zwar von der Spule von der das Magnetband abgenommen wird.

Der Schaltkreis ist so aufgebaut, daß ein Programmschritt eingeschaltet wird, der das Band zum Schlitten 3 hinführt, wenn das auf den Rollen 5 oder 9 enthaltene Band abgespult werden soll. Am Anfang der Umwechslung von einer auf die andere Spule wird also der gesamte Programmablauf in Gang gesetzt.

Es ist auch möglich die Länge des aufzuspulenden Bandes als festen Wert durch die Tastatur 15 einzugeben. Der Sensor 10 an der Rolle leitet dann einen dementsprechenden Befehl ein, sodaß nach dem Vorbeilaufen dieser Bandlänge der Schnitt des Magnetbandes und das Anheften des Bandes an die zweite Hälfte des Vorspannbandes erfolgt.

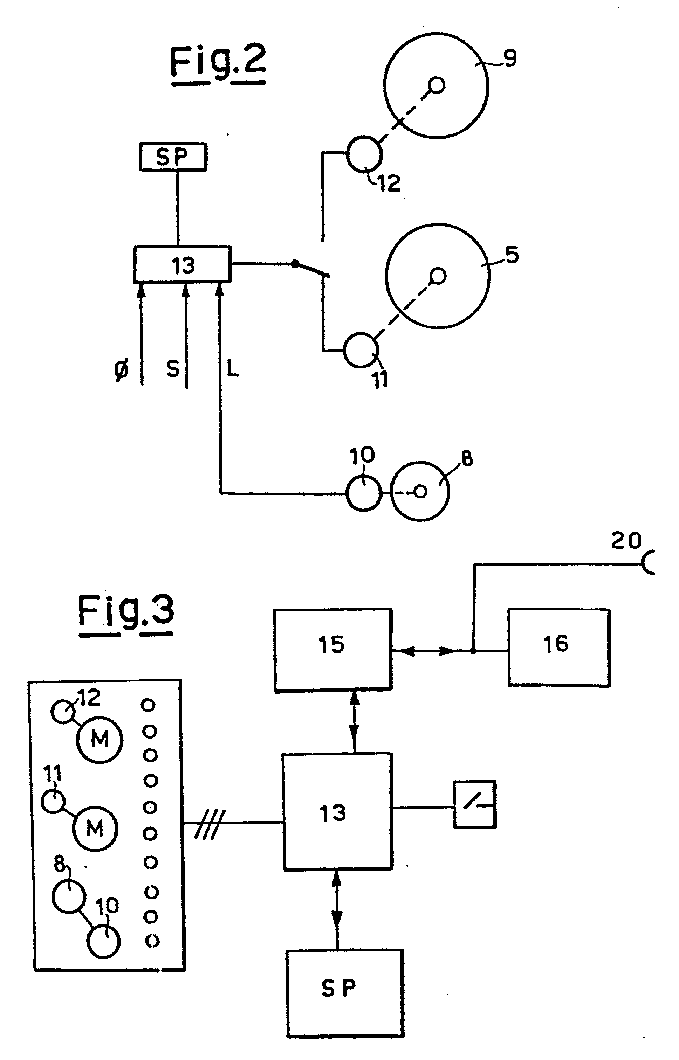

Wie in Fig. 3 gezeigt, ist außerdem eine mit dem Mikroprozessor verbundene Kontrollvorrichtung 16 vorgesehen, die als Datenterminal dient. Hier können gemessene Werte so miteinander verknüpft werden, daß eine Kontrolle der Funktionen der Maschine möglich ist. Die miteinander in Beziehung gesetzten Werte werden im Terminal gespeichert oder mittels eines entsprechenden Gerätes (Bildschirm 17) angezeigt.

Die Kontrollvorrichtung 16 ist außerdem so aufgebaut, daß es durch Außensteuerung möglich ist, Informationen im allgemeinen Programmablauf anzuzeigen. Dies können z.B codierte Fehlermessungen sein . Es kann auch ein Mehrfachanschluß 20 zum abnehmen der Daten vorgesehen werden

**Patentansprüche**

1. Verfahren zum Steuern einer Maschine zum Aufspulen von Magnetkassetten mit Vorspannband,
   - mit einer Saugvorrichtung für das Vorspannband,
   - mit einer Schneid- und Klebevorrichtung für das aufzuspulende Magnetband, das mit den Vorspannbandteilen in der Kassette verbunden wird,
   - mit Magnetbandzuführspulen (5, 9), von denen das Magnetband abgespult und der Schneid- und Klebevorrichtung zugeführt wird,
   - mit einer Längenmeßvorrichtung (10) für das aufzuspulende Magnetband und
   - mit einem Mikroprozessor,

   **dadurch gekennzeichnet daß** bei zwei aufeinanderfolgenden Abspulvorgängen mittels an der Zuführspulen angeordneter Umdrehungszähler die Anzahl der Umdrehungen der abspulenden Zuführspule und mittels der Längenmeßvorrichtung die dabei abgespulte Magnetbandlänge gemessen und die gemessenen Werte dem Mikroprozessor zur Ermittlung der mittleren Banddicke zugeführt werden, und daß unter Verwendung der ermittelten Magnetbanddicke und des Spulenkernradius der Zuführspule eine kritische Drehzahl der abspulenden Zuführspule ermittelt und zur Steuerung der Maschine verwendet wird, wobei diese kritische Drehzahl ein Maß für eine vorgegebene Länge von noch auf der abspulenden Zuführspule übriggebliebener Menge Magnetband darstellt.

2. Verfahren nach Anspruch 1, **dadurch gekennzeichnet**, daß unter Verwendung der ermittelten Magnetbanddicke, die Magnetbandlänge, die in einer Kassette Platz hat, ermittelt wird und bei Erreichen einer dieser Längen entsprechenden kritischen Drehzahl der abspulenden Zuführrolle der Wechsel von der abspulenden Zuführspule zur zweiten Zuführspule (5, 9) erfolgt.

3. Anordnung zur Durchführung des Steuerungsverfahrens nach Anspruch 1 oder 2 in Verbindung mit einer Maschine zum Aufspulen von Magnetkassetten mit Vorspannband,
   - mit einer Saugvorrichtung für das Vorspannband,
   - mit einer Schneid- und Klebevorrichtung für das aufzuspulende Magnetband, das mit den Vorspannbandteilen in der Kassette verbunden wird,
   - mit Magnetbandzuführspulen (5, 9), von denen das Magnetband abgespult und der Schneid- und Klebevorrichtung zugeführt wird,
   - mit einer Längenmeßvorrichtung (10) für das aufzuspulende Magnetband und
   - mit einem Mikroprozessor

   **dadurch gekennzeichnet daß** an den Zuführspulen Umdrehungszähler angeordnet sind, die bei zwei aufeinanderfolgenden Abspulvorgängen die Anzahl der Umdrehungen der abspulenden Zuführspule messen und die gemessenen Werte zusammen mit den Werten der dabei abgespulten und mittels der Längenmeßvorrichtung gemessenen Magnetbandlänge dem Mikroprozessor zugeführt werden, um die mittlere Banddicke und unter Verwendung der ermittelten Magnetbanddicke und des Spulenkernradius der Zuführspule eine kritische Drehzahl der abspulenden Zuführspule zu ermitteln, wobei diese kritische Drehzahl ein Maß für eine vorgegebene Länge von noch auf der abspulenden Zuführspule übriggebliebener Menge Magnetband darstellt und zur Steuerung der Maschine verwendet wird.

4. Maschine nach Anspruch 3, **dadurch gekennzeichnet**, daß mit dem Mikroprozessor (13) eine Dateneingabevorrichtung (15) für die Eingabe von Daten bezüglich der Größe des Zuführungsspulenkerns verbunden ist.

5. Maschine nach Anspruch 3 - 4, **dadurch gekennzeichnet**, daß die an den Achsen (11, 12) der Zuführungsspulen (5, 9) angeordneten Sensoren (14) und die Längenmeßvorrichtung über einen AND-Schaltkreis verbunden sind, der einen Steuerimpuls an den Antrieb der Zuführungsspule, von der die Entnahme des Magnetbandes erfolgt, abgibt.

6. Maschine nach Anspruch 3 - 5, **dadurch gekennzeichnet**, daß der Mikroprozessor (13) einen Speicher (SP) aufweist.

7. Maschine nach Anspruch 3 - 6, **dadurch gekennzeichnet**, daß der Wechsel von der ersten (5) auf die zweite (9) Spule vom Mikroprozessor (13) über eine Schneid- und Klebevorrichtung (6) gesteuert wird.

8. Maschine nach Anspruch 3 - 7, **dadurch gekennzeichnet**, daß der Mikroprozessor (13) mit einer Kontrollvorrichtung gekoppelt ist, die so ausgebildet ist, daß eine beliebige Kombination der gemessenen Werte speicherbar ist und einer Anzeigevorrichtung (17) zuführbar sind.

9. Maschine nach Anspruch 8, **dadurch gekennzeichnet**, daß die Maschine als Datenterminal und Koppelbaustein ausgebildet ist.

10. Maschine nach Anspruch 8 - 9, **dadurch gekennzeichnet**, daß die Kontrollvorrichtung mit einem von außen zugänglichen Mehrfachanschluß (20) versehen ist.

## Claims

1. Process for the control of a machine for the spooling up of magnetic cassettes with leader tape,
   - with a suction device for the leader tape,
   - with a cutting and gluing device for the magnetic tape to be spooled up, which is connected with the leader tape parts in the cassette,
   - with magnetic tape feed spools (5, 9) from which the magnetic tape is unspooled and fed to the cutting and gluing device,

- with a length measuring device (10) for the magnetic tape to be spooled up and
- with a microprocessor,

characterised thereby that in the case of two successive unspooling process the number of rotations of the feed spool being unspooled is measured by means of revolution counters arranged at the feed spools and the thereby unspooled magnetic tape length is measured by means of the length measuring device and the measured values are fed to the microprocessor for the determination of the mean tape thickness, and that a critical rotational speed of the feed spool being unspooled is determined with use of the determined magnetic tape thickness and the spool core radius of the feed spool and is used for the controlling of the machine, wherein this critical rotational speed represents a measure for a predetermined length of amount of magnetic tape still remaining on the feed spool being unspooled.

2. Process according to claim 1, characterised thereby that the magnetic tape length, for which there is room in a cassette, is determined with use of the determined magnetic tape thickness, and the changeover from the feed spool being unspooled to the second feed spool (5, 9) takes place on reaching of a critical rotational speed, corresponding to this length, of the feed spool being unspooled.

3. Arrangement for carrying out of the control process according to claim 1 or claim 2 in conjunction with a machine for spooling up of magnetic cassettes with leader tape,
   - with a suction device for the leader tape,
   - with a cutting and gluing device for the magnetic tape to be spooled up, which is connected with the leader tape parts in the cassette,
   - with magnetic tape feed spools (5, 9) from which the magnetic tape is unspooled and fed to the cutting and gluing device,
   - with a length measuring device (10) for the magnetic tape to be spooled up and
   - with a microprocessor,

characterised thereby that arranged at the feed spools are revolution counters, which in the case of two successive unspooling processes measure the number of rotations of the feed spool being unspooled and the measured values are fed together with the values of the thereby unspooled magnetic tape length as measured by means of the length measuring device, to the microprocessor in order to determine the mean tape thickness and, with use of the determined magnetic tape thickness and spool care radius of the feed spool, a critical rotational speed of the feed spool being unspooled, wherein this critical rotational speed represents a measure for a predetermined length of amount of magnetic tape still remaining on the feed spool being unspooled and is used for the controlling of the machine.

4. Machine according to claim 3, characterised thereby that connected with the microprocessor (13) is a data input device (15) for the input of data relating to the magnitude of the feeding spool core.

5. Machine according to claim 3-4, characterised thereby that the sensors (14) arranged at the axes (11, 12) of the feeding spools (5, 9) and the length measuring device are connected by way of an AND circuit, which issues a control pulse to the drive of the feeding spool from which the take off of the magnetic tape takes place.

6. Machine according to claim 3-4, characterised thereby that the microprocessor (13) has a store (SP).

7. Machine according to claim 3-6, characterised thereby that the changeover from the first (5) to the second (9) spool is controlled by the microprocessor (13) by way of a cutting and gluing device (6).

8. Machine according to claim 3-7, characterised thereby that the microprocessor (13) is coupled with a checking device which is so constructed that a desired combination of the measured values is storable and are feedable to a display device (17).

9. Machine according to claim 8, characterised that the machine is constructed as data terminal and coupling block.

10. Machine according to claim 8-9, characterised thereby that the checking device is provided with an externally accessible multiple connection (20).

**Revendications**

1. Procédé de commande d'une machine pour enrouler des cassettes magnétiques à bande amorce de début, avec

- un dispositif d'aspiration pour la bande amorce de début,
- un dispositif de coupure et de collage pour la bande magnétique à enrouler qui est reliée aux parties de bande amorce de début dans la cassette,
- des bobines d'amenée de bande magnétique (5, 9) desquelles la bande magnétique est dévidée et amenée au dispositif de coupure et de collage,
- un dispositif de mesure de longueur (10) pour la bande magnétique à enrouler et
- un microprocesseur,

caractérisé en ce que, dansile cas de deux processus de dévidage successifs, le nombre de tours de la bobine d'amenée en cours de dévidage est mesuré au moyenide compte-tours disposés au niveau des bobines d'amenée et la longueur de bande magnétique ainsi dévidé est mesurée au moyen du dispositif de mesure de longueur, et les valeurs mesurées sont envoyées au microprocesseur pour déterminer l'épaisseur moyenne de bande, et en ce que, à l'aide de l'épaisseur de bande magnétique déterminée et du rayon du noyau de la bobine d'amenée, un nombre de tours critique de la bobine d'amenée en cours de dévidage est déterminé et utilisé pour commander la machine, cc nombre de tours critique constituant une mesure d'une longueur prédéterminée de la quantité de bande magnétique qui reste encore sur la bobine d'amenée en cours de dévidage.

2.  Procédé selon la revendication 1, caractérisé en ce qu'au moyen de l'épaisseur de bande magnétique déterminée la longueur de bande magnétique qui tient dans une cassette est déterminée et, lorsqu'un nombre de tours critique de la bobine d'amenée en cours de dévidage correspondant à cette longueur est atteint, le passage de la bobine d'amenée en cours de dévidage à la deuxième bobine d'amenée (5, 9) se produit.

3.  Agencement pour la mise en oeuvre du procédé de commande selon la revendication 1 ou 2, en liaison avec une machine pour enrouler des cassettes magnétiques à bande amorce de début, avec

- un dispositif d'aspiration pour la bande amorce de début,
- un dispositif de coupure et de collage pour la bande magnétique à enrouler, qui est reliée aux parties de bande amorce de début dans la cassette,
- des bobines d'amenée de bande magnétique (5, 9), desquelles la bande magnétique est dévidée et amenée au dispositif de coupure et de collage,
- un dispositif de mesure de longueur (10) pour la bande magnétique à enrouler et
- un microprocesseur

caractérisé en ce que des compte tours sont disposés au niveau des bobines d'amenée, compte-tours qui, dans le cas de deux processus de dévidage successifs, mesurent le nombre de tours de la bobine d'amenée en cours de dévidage, et les valeurs mesurées sont envoyées au microprocesseur en même temps que les valeurs de longueur de bande magnétique alors dévidée et mesurée au moyen du dispositif de mesure de longueur, pour déterminer l'épaisseur moyenne de bande et, au moyenide l'épaisseur moyenne de bande déterminée et du rayon du noyau de la bobine d'amenée, un nombre de tours critique de la bobine d'amenée en cours de dévidage, ce nombre de tours critique constituant une mesure d'une longueur prédéterminée de la quantité de bande magnétique qui reste encore sur la bobine d'amenée en cours de dévidage et étant utilisé pour commander la machine.

4.  Machine selon la revendication 3, caractérisée en ce qu'un dispositif d'introduction de données (15) pour l'introduction de données concernant la taille du noyau des bobines d'amenée est relié au microprocesseur (13).

5.  Machine selon les revendications 3 et 4, caractérisée en ce que les capteurs (14) disposés sur les axes (11, 12) des bobines d'amenée (5, 9) et le dispositif de mesure de longueur sont reliés par l'intermédiaire d'un circuit ET qui envoie une impulsion de commande au dispositif d'entraînement de la bobine d'amenée sur laquelle est prélevée la bande magnétique.

6.  Machine selon les revendications 3 à 5, caractérisée en ce que le microprocesseur (13) présente une mémoire (SP).

7.  Machine selon les revendications 3 à 6, caractérisée en ce que le passage de la première bobine (5) à la deuxième bobine (9) est commandé par le microprocesseur (13) par l'intermédiaire d'un dispositif de coupure et de collage (6).

8.  Machine selon les revendications 3 à 7, caractérisée en ce que le microprocesseur (13) est couplé à un dispositif de contrôle qui est agencé de telle manière qu'une combinaison quelconque des valeurs mesurées peut être mémorisée et peut être envoyée à un dispositif de visualisation (17).

9. Machine selon la revendication 8, caractérisée en ce que la machine est sous forme d'un terminal de données et d'un élément de couplage.

10. Machine selon les revendications 8 et 9, caractérisée en ce que le dispositif de contrôle est muni d'un branchement multiple (20) accessible de l'extérieur.

**Fig.1**

# Fig.2

# Fig.3